# EUROPEAN PATENT APPLICATION

(11) **EP 1 732 292 A1**
(43) Date of publication of application: **13.12.2006**
(21) Application number: 05721665.7
(22) Date of filing: 30.03.2005
(51) Int. Cl.: H04M 1/05

(54) **TALKING DEVICE USING BONE CONDUCTION SPEAKER**

(30) Priority: 31.03.2004 JP 2004106474
(71) Applicant: Temco Japan Co., Ltd., Tokyo 168-0062 (JP)
(72) Inventor: TAKEI, Ryuichi, Suginami-ku, Tokyo 1680062 (JP); KOBAYASHI, Kazuji, Suginami-ku, Tokyo 1680062 (JP); WAKABAYASHI, Tetsuo, Suginami-ku, Tokyo 1680062 (JP)
(74) Representative: Bentz, Jean-Paul
(86) International application number: PCT/JP2005/006084
(87) International publication number: WO 2005/096599

(57) **Abstract**

The object is to provide a talking device, which employs a bone conduction speaker. The device is small in size, light in weight and excellent in fittingness. Further, the device enables its users to communicate with each other without suffering from any difficulty in hearing even in a noisy environment. The device uses a bone conduction speaker, and may also have an ornamental function to serve as a pendant during non-use of the device. The device comprises a bone conduction speaker (5), an air conduction microphone (6) and a wireless circuit. The device is capable of: fitting to the user's body; and, connecting to a cell phone (8) by wireless through the wireless circuit. Both the bone conduction speaker (5) and the wireless circuit are packed in a head portion (2) of the ornamental pendant.

## Description

### Technical Field:

The present invention relates to a talking device using a bone conduction speaker, and more particularly to a talking device, which uses the bone conduction speaker, assumes a pendant-like shape and is connected with a cell phone by wireless in use.

### Background Art:

In general, communications through cell phones are conducted in a manner such that a user has a built-in speaker of his cell phone applied to his ear and has his mouth disposed adjacent to a microphone. Or, an earphone may be used in the communications. When the communications are conducted through the cell phone, it is necessary for the user to hold the cell phone in an easily accessible place. When the cell phone is placed in such an easily accessible place, there is a fear that the cell phone disturbs him in his daily action. On the other hand, when the cell phone is housed in the user' bag, the cell phone thus housed is poor in accessibility, which makes it impossible for the user to immediately respond to a phone call. In the case where the earphone is used, the user is disturbed in his daily action by the presence of an earphone cord used in the earphone. In addition, constant use of the earphone means constant insertion of the earphone into the user's ear, which causes discomfort to the user. This is disadvantage of the earphone in use.

Patent document 1: Japanese Patent application Laid-open No. Hei 11-252221 Gazette;
Patent document 2: Japanese Patent application Laid-open No. 2000-13485 Gazette; and
Patent document 3: Japanese Patent application Laid-open No. 2001-127864 Gazette;

### DISCLOSURE OF THE INVENTION

### PROBLEMS TO BE SOLVED BY THE INVENTION

As described above, the conventional cell phone suffers from various disadvantages in communication. Consequently, it is an object of the present invention to provide a talking device using a bone conduction speaker, which is free from the above-mentioned disadvantages. In other words, it is an object of the present invention to provide a talking device using a bone conduction speaker, which is small in size, light in weight and excellent in fittingness, and further enables its users to communicate with each other without suffering from any difficulty in hearing even in a noisy environment, and may also have an ornamental function to serve as a pendant during non-use of the device.

### MEANS FOR SOLVING THE PROBLEMS

In the present invention, the above object is accomplished by providing a talking device, which is provided with a bone conduction speaker, an air conduction microphone and a wireless circuit and capable of: fitting to its user's body; and, connecting to a cell phone by wireless through the wireless circuit.

Preferably both the bone conduction speaker and the wireless circuit are packed in a head portion of an ornamental pendant. Further: the air conduction microphone is contained in a buckle portion; and, the buckle portion serves to connect the head portion of the pendant with a strap.

Furthermore, preferably: the head portion of the pendant is detachably mounted on the strap through the buckle portion; and, a battery for energizing each of the bone conduction speaker, the air conduction microphone and the wireless circuit is disposed in the strap.

Still further, the buckle portion for housing the may be attachable to a user's pocket.

### EFFECT OF THE INVENTION

Effects of the present invention will be enumerated as follows:
1) It suffices for the user to simply wear the talking device which assumes a pendant shape. In feeling, the talking device can be worn as an ordinary type of pendant. Due to this, the talking device does not disturb the user in action.
2) Since the microphone portion is packed in the buckle portion in the head portion of the pendant, it is possible to downsize the talking device as a whole in an easy manner, wherein the talking device assumes a pendant-like shape and makes it easy to suppress the howling.
3) By detachably mounting the buckle portion of the head portion of the pendant on the strap portion, it is also possible for the user to independently use the head portion itself of the pendant as an accessory or ornamental item to the user's costume other than a pendant itself.
4) By additionally providing the battery in the strap portion, it is possible to increase the talking device in service life and also possible to downsize the head portion of the pendant.

### BEST MODE FOR CARRYING OUT THE INVENTION

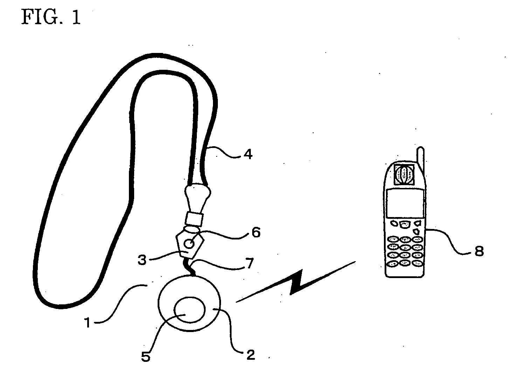

Preferred embodiments for carrying out the present invention will be described with reference to the accompanying drawings. As shown in Fig. 1, a talking device 1 using a bone conduction speaker of the present invention is constructed of: a head portion 2 of a pendant in which portion 2 both a bone conduction microphone 4 and a wireless circuit are incorporated; a buckle portion 3 in which an air conduction microphone 6 is provided; and, a strap 4 detachably mounted on the above buckle portion 3. A battery may be additionally incorporated in the head portion 2 of the pendant.

The bone conduction speaker 5 functions to transmit a voice sound as a bone conduction sound, and has its vibrating surface exposed to the head portion 2 of the pendant. In use, the bone conduction speaker 5 has its vibrating surface brought into close contact with an area adjacent to the user's ear. In construction, both the bone conduction speaker 5 and the air conduction microphone 6 are electrically connected with the wireless circuit. A cord, through which the air conduction microphone is connected with the wireless circuit, is adequately covered with an ornamental coating for keeping the talking device of the present invention in good ornamental appearance.

A radius of several meters in range of wireless communication, within which range the talking device 1 can communicate with a cell phone 8, is considered to be enough in use. Consequently, it is preferable for the wireless circuit to realize wireless communication according to a so-called "Blue Tooth" system. It is possible for the wireless circuit of the "Blue Tooth" system to keep its standby mode without exception. Due to this, even when the talking device 1 is not used for a prolonged period of hours, there is no fear that the battery is wasted.

Further, in the preferred embodiment, the talking device 1 is provided with the function of responding to a phone call in operation, which enables the talking device to be linked to the cell phone 8. In other words, this means that: when the user makes his response in communication, he may take a shortcut by neglecting to operate a reception button of the cell phone 8. Due to this, the necessity for holding the cell phone 8 by his hand is precluded and the necessity for placing the cell phone 8 in a good place in accessibility in order to immediately make his response to a phone call is also precluded.

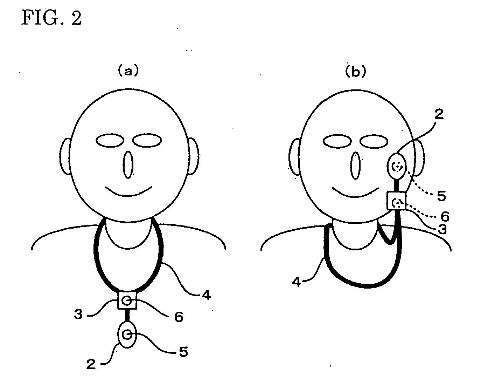

Fig. 2 shows how to use the talking device of the present invention. When the user carries and wears the talking device, the device is suspended from the user's neck as is in the case of an ordinary pendant. In making his communication, the bone conduction speaker 5 in the head portion 3 of the pendant is slightly abutted against an appropriate area of the user such as his forehead, his temple, his cheek bone, or his glabella, that is, a flat area in bone between his eyebrows so as to catch a sound having been received.

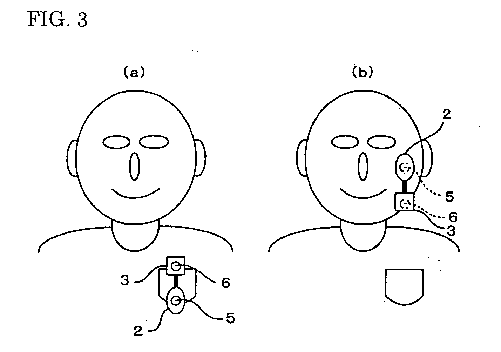

In an embodiment of the present invention shown in Fig. 3, the buckle portion 3 is removed from the strap 4 by replacing it with: a clip provided in the buckle portion 3; or, a snap hook mounted in a rear side of the buckle portion 3. Alternatively, the buckle portion 3 together with the strap may be made attachable to a pocket of the user's costume. In this case, it is possible for the buckle portion 3 to have many options in its attaching manner according to the user's costume or taste for costume.

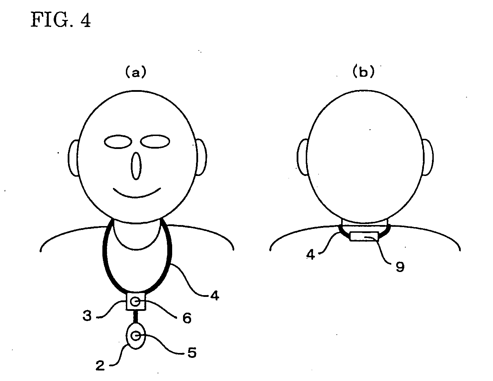

In an embodiment of the present invention shown in Fig. 4, a battery 9 is provided in the strap 4. In this case, any one of the bone conduction speaker 5, the air conduction speaker 6 and the wireless circuit (not shown in the drawings) is connected with a power cable, wherein the power cable is extended from the battery 9 but not shown in the drawings. Preferably, the power cable passes through a hollow portion of the strap 4 assuming a hollow cord-like shape so as to not impair the strap 4 and the like in appearance.

The head portion 2 of the pendant, which portion 2 serves as a container of both the bone conduction speaker 5 and the wireless circuit, is made of, preferably, damping material such as rubber, urethane resins, silicone resins and the like. Further, preferably such damping material is coated with rigid material such as plastics, metals and the like. In appearance, the head portion 2 of the pendant may assume any arbitrary one of various ornamental shapes, patterns and colors.

While the present invention has been described in detail to some extent with reference to the preferred embodiments thereof, it will be understood by those skilled in the art that various changes in form and details may be made therein without departing from the spirit and scope of the present invention as defined by the appended claims. In other words, the present invention is not limited in scope by its specified embodiments.

### BRIEF DESCRIPTION OF THE DRAWINGS

[Fig. 1] is a perspective view of an embodiment of the present invention, illustrating its appearance.
[Fig. 2] is a view showing how to use an embodiment of the present invention.
[Fig. 3] is a view showing how to use another embodiment of the present invention.
[Fig. 4] is a view showing how to use still another embodiment of the present invention.

## Claims

1. A talking device, which is provided with a bone conduction speaker, an air conduction microphone and a wireless circuit and capable of: fitting to its user's body; and, connecting to a cell phone by wireless through said wireless circuit.

2. The talking device using said bone conduction speaker as set forth in claim 1, wherein both said bone conduction speaker and said wireless circuit are packed in a head portion of an ornamental pendant.

3. The talking device using said bone conduction speaker as set forth in claim 2, wherein: said air conduction microphone is contained in a buckle portion; and, said buckle portion serves to connect said head portion of said pendant with a strap.

4. The talking device using said bone conduction speaker as set forth in claim 3, wherein said head portion of said pendant is detachably mounted on said strap through said buckle portion.

5. The talking device using said bone conduction speaker as set forth in claim 4, wherein a battery for energizing each of said bone conduction speaker, said air conduction microphone and said wireless circuit is disposed in said strap.

6. The talking device using said bone conduction speaker as set forth in claim 3, wherein said buckle portion is attachable to a user's pocket.

7. The talking device using said bone conduction speaker as set forth in claim 1, wherein said talking device functions to link said wireless circuit to said cell phone.
